Europäisches Patentamt

(19) European Patent Office

Office européen des brevets

(11) Veröffentlichungsnummer: **0 011 723**
**B1**

(12) **EUROPÄISCHE PATENTSCHRIFT**

(45) Veröffentlichungstag der Patentschrift:
27.04.83

(51) Int. Cl.³: **G 01 B 11/06**

(21) Anmeldenummer: **79104231.0**

(22) Anmeldetag: **31.10.79**

(54) **Verfahren und Einrichtung zur interferometrischen Messung von sich ändernden Schichtdicken.**

(30) Priorität: **04.12.78 US 966415**

(43) Veröffentlichungstag der Anmeldung:
**11.06.80 Patentblatt 80/12**

(45) Bekanntmachung des Hinweises auf die Patenterteilung:
**27.04.83 Patentblatt 83/17**

(84) Benannte Vertragsstaaten:
**DE FR GB**

(56) Entgegenhaltungen:
**DE-A-2 448 294**
**US-A-3 737 237**

**SOLID STATE ELECTRONICS, Band 11, Nr. 1, Januar 1968, Oxford, GB I. FRANZ et al.: «A simple non-destructive method of measuring hte thickness of transparent thin films between 10 and 600nm», Seiten 59–64**

**IBM TECHNICAL DISCLOSURE BULLETIN, Band 14, Nr. 12, Mai 1972, New York US, B. BREZOCZKY: «Film thickness measurement with null detection», Seite 3713**

**IBM TECHNICAL DISCLOSURE BULLETIN, Band 20, Nr. 8, Januar 1978, New York, US, J.P. KIRK et al.: «Film thickness monitor»**

(73) Patentinhaber: **International Business Machines Corporation, Armonk, N.Y. 10504 (US)**

(72) Erfinder: **Gaston, Charles Arden, 8 Saddle Rock Drive, Poughkeepsie, New York 12603 (US)**
Erfinder: **Kirk, Joseph Pennell, Chelsea Road, Chelsea, New York 12512 (US)**
Erfinder: **Wasik, Chester Alexander, 7 Scott Court, Poughkeepsie, New York 12601 (US)**

(74) Vertreter: **Teufel, Fritz, Dipl.-Phys., Schönaicher Strasse 220, D-7030 Böblingen (DE)**

Verfahren und Einrichtung zur interferometrischen Messung von sich ändernden Schichtdicken

Die Erfindung betrifft ein Verfahren zur interferometrischen Messung von Schichtdicken nach dem Oberbegriff von Anspruch 1 und eine Einrichtung zur Durchführung des Verfahrens.

Zur Messung der Dicke einer durchsichtigen dünnen Schicht auf optischem Wege sind zahlreiche Verfahren bekannt. Bei allen diesen Verfahren wird die Intensität eines mit der Schicht in Wechselwirkung tretenden Lichtstrahls gemessen, wobei gleichzeitig ein Parameter des Systems kontinuierlich geändert wird (z.B. die Wellenlänge, der Einfallswinkel, die Polarisation usw.). Wenn eine sich ändernde Schichtdicke laufend registriert werden soll, sind diese Verfahren jedoch so langsam oder so teuer, dass sie nicht mehr praktikabel sind. Diese bei den bekannten Verfahren störende Änderung der Schichtdicke kann aber nun selbst als Abtastvariable eingesetzt werden.

In der Optik ist es seit langem bekannt, dass Licht einer bestimmten Wellenlänge, das an einer transparenten dünnen Schicht reflektiert wird oder durch diese hindurchgeht, je nach Dicke der Schicht zu einer konstruktiven oder destruktiven Interferenz führt. Wenn also die Dicke einer Schicht kontinuierlich zu- oder abnimmt, ergibt sich aufgrund der Interferenz eine sinusförmige Intensitätsfluktuation im durchgelassenen oder reflektierten Licht.

Zyklische Änderungen der optischen Interferenz werden im Stand der Technik zur laufenden Messung der Dicke einer durchsichtigen Schicht seit langem verwendet. Insbesondere ist es bekannt, die absolute Dicke einer niedergeschlagenen Schicht, beispielsweise bei Kathodenzerstäubung, dadurch zu bestimmen oder zu regeln, dass die Anzahl der Zyklen in optischem Interferenzsignal gezählt wird, ausgehend von der Schichtdicke 0 bei Beginn des Niederschlags. Das gleiche Verfahren wurde zur Überwachung von abnehmenden Schichtdicken angewandt, in diesem Fall muss jedoch die ursprüngliche Schichtdicke genau bekannt sein, um die absolute Dicke eindeutig bestimmen zu können. Ein Beispiel für die Messung der Dicke einer auf einem Substrat niedergeschlagenen Schicht durch Auszählen von Interferenzmaxima ist in der DE-A-2 448 294 beschrieben; da nach der dort gestellten Aufgabe neben der vom Wert Null aus aufgebrachten Schicht sowohl deren Enddicke als auch deren Brechungsindex unbekannt sind, werden die durch Interferenz beeinflussten Intensitätskurven von zwei reflektierten Strahlenbündeln gleicher Wellenlänge aufgenommen, die unter verschiedenen Einfallswinkeln auf die Schicht auftreffen. Aus der Zahl der Interferenzmaxima in beiden Kurven können die beiden unbekannten Grössen Dicke und Brechungsindex ermittelt werden. Eine Anwendung des Verfahrens bei unbekannter Ausgangsdicke ist nicht möglich.

Dieses allgemeine Verfahren wurde schon verbessert, indem statt Licht einer Wellenlänge zwei sich geringfügig unterscheidende Wellenlängen verwendet wurden, um die Interferenzmuster zu erzeugen; anschliessend werden dann beispielsweise die Ausgangssignale der beiden Detektoren durch Summen- und Differenzverstärker kombiniert, um die gesuchte Schichtdicke genauer zu bestimmen. Alle diese Systeme unterlagen jedoch der Beschränkung, dass die Schichtdicke nur in bezug auf einen bekannten Referenz- oder Ausgangspunkt bestimmt werden konnte. Die zyklische Variation des Ausgangssignals dieser Systeme liefert keine eindeutige Information über die absolute Schichtdicke, sofern nicht zusätzliche Parameter herangezogen werden.

Aus dem Artikel «A simple non-destructive method of measuring the thickness of transparent thin films between 10 and 600 nm» von I. Fränz und W. Langheinrich in Solid-State Electronics 1968 Vol. 11, Seiten 59–64 ist ein Messverfahren für die Dicke dünner Schichten bekannt, bei dem die Intensität des bei zwei verschiedenen Wellenlängen an der Schicht reflektierten Lichtes nach Interferieren gemessen wird, um mit den Messwerten anhand von Eichkurven die zugehörigen Schichtdicken zu bestimmen. Durch die Verwendung zweier Wellenlängen können die sich aus der Eichkurve für eine Wellenlänge ergebenden mehrdeutigen Ergebnisse eindeutig bestimmten Dickenbereichen zugeordnet werden. Dieses Messverfahren lässt sich nicht für eine laufende Überwachung sich ändernder Schichtdicken heranziehen; ausserdem ist es messtechnisch schwierig, absolute Intensitätswerte mit grosser Genauigkeit und ausreichender Reproduzierbarkeit zu erhalten.

Bei vielen praktischen Messaufgaben ist die ursprüngliche Dicke einer abzutragenden Schicht nicht genau bekannt; dieser Fall tritt beispielsweise häufig in der Halbleiterindustrie auf, wo z.B. Quarzschichten auf einer Siliciumscheibe bis zu einer genau festgelegten Enddicke abgeätzt werden müssen. Die Dicke der Quarzschicht liegt innerhalb eines bestimmten und bekannten Dickenbereichs, die absolute Schichtdicke ändert sich jedoch von Halbleiterscheibe zu Halbleiterscheibe in Abhängigkeit von der Genauigkeit der Prozesskontrolle in vorhergehenden Herstellschritten. Die absolute Dicke dieser Quarzschicht muss deshalb vor Abschluss des Ätzprozesses bekannt sein; nur dann ist es möglich, den gewünschten Endpunkt des Prozesses zu bestimmen und ein Überätzen zu vermeiden.

Die vorliegende Erfindung stellt sich daher die Aufgabe, ein Verfahren und eine Einrichtung der eingangs genannten Art anzugeben, mit denen auf einfache Weise der Absolutwert sich ändernder Dicken von durchsichtigen Schichten bestimmt werden kann, ohne dass vorher die Dicke der Ausgangsschicht genau bestimmt werden müsste.

Diese Aufgabe wird durch die in den Ansprüchen 1 und 6 gekennzeichnete Erfindung gelöst;

Ausgestaltungen der Erfindung werden in den Unteransprüchen gekennzeichnet.

In einem Ausführungsbeispiel wird dazu die Schicht, deren Dicke registriert werden soll, mit weissem Licht beleuchtet. Das durch optische Interferenz an der dielektrischen Schicht modifizierte reflektierte Licht wird durch Photodetektoren an zwei voneinander verschiedenen Wellenlängen gemessen. Die zyklischen Intensitätsschwankungen bei beiden Wellenlängen werden miteinander verglichen, um eine eindeutige Bestimmung der absoluten Schichtdicke zu erhalten. Bei dem vorgeschlagenen Verfahren ist diese Eindeutigkeit gewährleistet, obwohl die ursprüngliche Schichtdicke nur so ungenau bekannt ist, dass im Intensitätsverlauf einer jeden einzelnen Wellenlänge der Unsicherheitsbereich mehrere Intensitätszyklen betragen würde. Zur Vereinfachung des Phasenvergleichs der beiden periodischen Intensitätskurven können die Wellenlängen so ausgewählt werden, dass bestimmte ausgesuchte Extrempunkte beider Kurven bei einer Schichtdicke zusammenfallen, die geringer ist als die erwartete minimale Anfangsdicke und dass bei grösseren Schichtdicken bis einschliesslich des erwarteten Maximums ein solches Zusammenfallen nicht erfolgt. Die Bestimmung der absoluten Schichtdicke auf diesem Weg ermöglicht es, Ätzprozesse bis zum gewünschten Endpunkt ohne Überätzen durchzuführen.

Die zur Schichtdickenmessung verwendete Einrichtung ist konstruktiv einfach; durch Beleuchtung mit weissem Licht steht gleichzeitig eine polychromatische optische Abbildung des gemessenen Bereichs zur Verfügung (z.B. zur visuellen Beobachtung). Da nur die relative Lage der Extrempunkte zu beiden Interferenzkurven für die Messung von Wichtigkeit ist, entfällt die messtechnisch schwierige absolute Bestimmung der an der Schicht bzw. dem Substrat reflektierten Intensität.

Ein Ausführungsbeispiel der Erfindung wird nun anhand von Zeichnungen näher erläutert.

Es zeigen:

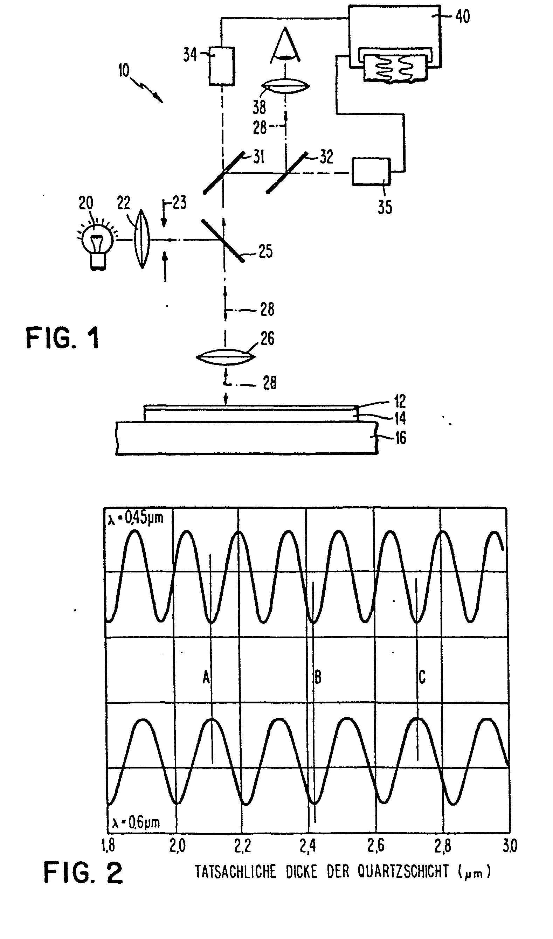

Fig. 1 eine schematische Darstellung eines optischen Systems zur Beleuchtung einer Oberfläche mit weissem Licht, zur Registrierung der Intensität des an der Oberfläche reflektierten Lichts bei zwei bestimmten, voneinander verschiedenen Wellenlängen und zur Erzeugung eines Abbildes dieser Oberfläche mit allen Wellenlängen, ausser den zur Messung verwendeten.

Fig. 2 eine graphische Darstellung des Ausgangssignals des in Fig. 1 beschriebenen optischen Instruments, wenn die untersuchte Oberfläche eine durchsichtige dünne Schicht aufweist, deren Dicke kontinuierlich abnimmt, und wenn die beiden registrierten Wellenlängen so ausgewählt sind, dass sich ein Verhältnis von ungefähr 1,33 zwischen den beiden Zykluslängen ergibt.

Bei einigen zur Messung sich ändernder Schichtdicken verwendeten Systemen muss die absolute Schichtdicke bestimmt werden können und nicht nur die Änderung bezüglich eines unbekannten Anfangswerts. Die optische Interferenz in einer durchsichtigen Schicht moduliert einen monochromatischen Lichtstrahl so, dass seine Amplitude eine sinusförmige Komponente aufweist, wenn sich die Dicke kontinuierlich ändert. Eine Änderung der Dicke von $\lambda/2$ n (wo $\lambda$ = Wellenlänge und n = Brechungsindex) entspricht einem vollständigen Zyklus des sinusförmigen Signals. Ein einzelner monochromatischer Lichtstrahl erfordert daher, dass die ursprüngliche Dicke bis auf $\lambda/2n$ bekannt ist. Bei normalem optischen Material (n = 1,5) und praktisch verwendbaren Wellenlängen ($\lambda \leq \mu m$) muss die ursprüngliche Schichtdicke also mit einer Toleranz von 0,3 $\mu$ bekannt sein, um die Eindeutigkeit der verschiedenen Ordnungen zu gewährleisten.

Steht dagegen ein sinusförmiges Signal zur Verfügung, das bei einer zweiten Wellenlänge aufgenommen wurde, wird es möglich, die Eindeutigkeit auch bei einer sehr viel grösseren Unsicherheit in der Bestimmung der Ursprungsdicke zu gewährleisten. Sind beispielsweise die $\lambda/2n$-Werte für die beiden Wellenlängen 0,15 und 0,25 $\mu m$, so ist der Wiederholungszyklus bzw. der Eindeutigkeitsbereich für das gemeinsame Signal dreimal so gross wie für das Signal, das alleine bei der längeren Wellenlänge aufgenommen wurde.

Könnte die Phase des Sinussignals mit mathematischer Genauigkeit bestimmt werden, gäbe es überhaupt keine Grenze für den Bereich, der bei Verwendung zweier verschiedener Wellenlängen eindeutig bestimmt werden könnte. Beträgt beispielsweise das Verhältnis der Zykluslängen der beiden Sinussignale m:m + 1, so ist der gemeinsame Wiederholzyklus m-mal so lang wie der längere Zyklus alleine. Bei der Auslegung eines praktischen Systems muss jedoch die Unsicherheit bei der Bestimmung von Extrempunkten des Signals in Betracht gezogen werden. Unter der Annahme, dass der Extrempunkt eines sinusförmigen Signals innerhalb $\pm$ eines Bruchteils F eines Zyklus bestimmt werden kann, erlauben die folgenden Gleichungen den Unsicherheitsbereich in der Bestimmung der Anfangsdicke zu bestimmen, der noch eindeutig aufgelöst werden kann.

$\lambda_1$ und $\lambda_2$ seien die beiden Wellenlängen,

$n_1$ und $n_2$ die entsprechenden Brechungsindizes der zu messenden Schicht.

Mit $R = \dfrac{\lambda_2 n_1}{n_2 \lambda_1}$ sei das Wellenlängenverhältnis innerhalb der Schicht definiert.

Dann wiederholt sich das gemeinsame Signal nach $m_1$ Zyklen des Signals von Wellenlänge $\lambda_1$ und nach $m_2$ Zyklen des Signals von $\lambda_2$ (da die Extremwerte innerhalb der Messgenauigkeit wieder zusammenfallen können), wenn $m_1 - m_2 R \leq (R + 1) F$.

Fig. 1 zeigt ein optisches System 10, mit dem die Dicke einer durchsichtigen Schicht 12 auf einem Halbleiterplättchen 14 gemessen werden kann, das auf einer geeigneten Halterung 16 angebracht ist. Bei der Probe 14 kann es sich beispielsweise um eine Halbleiterscheibe mit einer darauf niedergeschlagenen Quarzschicht handeln, die zusammen mit mehreren solcher Scheiben einem Ätzprozess unterworfen wird. Das im folgenden beschriebene optische System ist Teil eines Steuersystems zur Bestimmung des gewünschten Endpunkts eines Ätzprozesses.

Zum optischen System gehört eine Quelle 20 für weisses Licht sowie ein Linse 22 und eine Blende 23, mit denen Licht auf einen neutralen Strahlteiler 25 gelenkt wird. Der Strahlteiler 25 umfasst vorzugsweise eine Glasplatte, die auf einer Seite eine Metall- oder dielektrische Schicht aufweist und so Licht aller Wellenlängen teilweise reflektiert. Eine Linse 26 empfängt Licht vom Strahlteiler und fokussiert es in einem ausgewählten Punkt auf der Oberfläche der Schicht 12. Das Licht wird sowohl von der oberen als auch der unteren Oberfläche der Schicht 12 reflektiert und läuft längs des Lichtweges 28 durch die Linse 26 und durch den Strahlteiler 25.

Das reflektierte Licht wird an einem Schmalbandfilter 31 teilweise reflektiert; im Strahlengang des am Filter 31 reflektierten Lichts ist ein weiteres Schmalbandfilter 32 angebracht. Beispielsweise bestehen die Filter 31 und 32 aus Glasplatten, die auf einer Seite mit aufeinanderliegenden dielektrischen Schichten versehen wurden, um Licht einer bestimmten Wellenlänge durchzulassen und Licht aller anderen Wellenlängen zu reflektieren. Filter 31 lässt Licht einer ersten bestimmten Wellenlänge durch, Filter 32 ebenso Licht einer zweiten bestimmten Wellenlänge. Ein Photodetektor 34 empfängt das durch Filter 31 gelangende Licht, ein ähnlicher Photodetektor 35 das durch Filter 32 gelangende Licht. Das verbleibende Licht, das an beiden Bandfiltern im Strahlengang 28 reflektiert wurde, gelangt zur Linse 38, wo es fokussiert wird und die visuelle Beobachtung des Prüfpunktes auf Schicht 12 ermöglicht. Mit Hilfe der visuellen Beobachtung kann der Prüfpunkt auf eine bestimmte zu untersuchende Stelle der Halbleiterscheibe ausgerichtet werden.

Es ist hier hervorzuheben, dass in dem beschriebenen optischen System eine besonders wirksame Anordnung zur Ausfilterung eines oder mehrerer monochromatischer Strahlen aus einem polychromatischen Strahl beschrieben ist und dass dieses Prinzip auch vorteilhaft zur Realisierung der Verfahren verwendet werden kann, die im Stand der Technik beschrieben sind. Im besonderen handelt es sich hier um die Anordnung der Filter 31 und 32, die mit dem einfallenden Strahl einen Winkel bilden, so dass die reflektierten Wellenlängen zu anderen optischen Komponenten abgelenkt werden; die Filter wirken somit als Strahlteiler.

Zum Messsystem gehört ausserdem ein Kurvenschreiber 40, der für zwei Eingangssignale ausgelegt ist und eine kontinuierliche Aufzeichnung beider Signale, entsprechend der Darstellung in Fig. 2. liefert. Der Kurvenschreiber setzt das elektrische Ausgangssignal des Photodetektors 34 in eine im wesentlichen sinusförmige Darstellung der Amplitudenänderungen bei der durch Filter 31 durchgelassenen Wellenlänge um, die aufgrund entsprechender Dickenänderung der Schicht 12 entstehen. In derselben Weise erscheint das Ausgangssignal von Photodetektor 35 als im wesentlichen sinusförmige Kurve, die entsprechende Amplitudenänderungen bei der durch Filter 32 durchgelassenen Wellenlänge wiedergibt.

Jede der ausgewählten Wellenlängen ergibt ein verschiedenes Interferenzmuster, das abhängig von der Wellenlänge selbst und vom Brechungsindex des Quarzes für diese bestimmte Wellenlänge ist. Das erste Interferenzmuster zeigt daher Maxima und Minima, die mit den Maxima und Minima bei der zweiten Wellenlänge nicht in Phase sind. An bestimmten Stellen treten jedoch Koinzidenzen der Extrempunkte auf. Aus Fig. 2 ist beispielsweise ersichtlich, dass innerhalb des dargestellten Dickenbereichs keine zusammenfallenden Maxima auftreten, jedoch ein zusammenfallendes Minimum, das durch Linie B bei 2,42 µ Dicke dargestellt wird, sowie Koinzidenzen von Minima mit Maxima an den Stellen A und C (bei 2,12 bzw. 2,74 µ). Ist also bekannt, dass die Anfangsdicke der Schicht 12 im Bereich 2,2 bis 2,7 µ liegt, so kann aus der Beobachtung der ersten Koinzidenz zwischen einem Minimum im 0,45 µ Signal und einem Maximum im 0,6 µ Signal geschlossen werden, dass der absolute Wert der Schichtdicke, der im Ätzprozess erreicht wurde, 2,12 µ beträgt.

Danach können die in einer der beiden Signalkurven auftretenden Extrempunkte dazu verwendet werden, das während des Ätzens abgetragene Material zu bestimmen und das Erreichen der gewünschten Enddicke zu steuern. Damit kann der Prozess des Abtragens einer Quarzschicht bis zu einem bestimmten Niveau ohne Überätzen genau kontrolliert werden. Diese Steuerung kann durch einen Operator oder, wenn gewünscht, auch automatisch erfolgen.

Es ist klar, dass die im Beispiel ausgewählten Wellenlängen, 0,6 und 0,45 µ, nicht die einzigen sind, die verwendet werden können. Bei der Wahl dieser Wellenlängen wurde sogar der Nominalwert 1,33 für das Verhältnis nicht genau erreicht (da der Brechungsindex von Quarz bei diesen beiden Wellenlängen nicht gleich ist), so dass eine Maximum-Minimum-Koinzidenz (und nicht eine Maximum-Maximum-Koinzidenz) die beste Phasenreferenz ergab. Eine kleine Änderung der verwendeten Wellenlängen kann eine grosse Änderung der Lage zusammenfallender Extrempunkte hervorrufen.

Bei der Auswahl von zwei Wellenlängen zur eindeutigen Messung von Schichtdicken wird vorzugsweise eine der Wellenlängen so klein wie möglich gewählt, um die Genauigkeit bei der Bestimmung der Enddicke zu erhöhen. Es ist ausserdem wünschenswert, ein Frequenzverhältnis zu wählen, das bei einer geeigneten Dicke einen eindeutig erkennbaren, koinzidierenden Extremwert liefert, d.h. ein Verhältnis, das es einem Operator ermöglicht, die korrekten koinzidierenden Extrempunkte visuell mit grosser Sicherheit zu bestimmen.

Es ist ausserdem natürliche notwendig, ein Verhältnis zu wählen, das zwischen koinzidierenden Extrempunkten einen so grossen Widerholzyklus aufweist, dass der erwartete Bereich von zu messenden Filmdicken keinen koinzidierenden Punkt enthält und damit die tatsächliche Filmdicke nicht maskiert. Der erste koinzidierende Punkt, der bei einem Halbleiterplättchen mit einer Schichtdicke im erwarteten Bereich beobachtet werden kann, sollte auftreten, nachdem die Dicke unter den Minimalwert der erwarteten Anfangsdicken gesunken ist.

Unter Beachtung all dieser Faktoren wurde festgestellt, dass ein Wellenlängenverhältnis (R) von 1,33 für einen weiten Bereich praktischer Anwendungen vorteilhaft ist. Dieses Verhältnis führt zu koinzidierenden Maxima, die durch drei Zyklen in einem Signal und vier Zyklen im anderen getrennt sind. Ist der Brechungsindex der Schicht 1,5 und die kleinere Wellenlänge 0,45 µ, so erlaubt dieses Verhältnis eine eindeutige Schichtdickenbestimmung, wenn der Unsicherheitsbereich in den Anfangsschichtdicken bis zu 0,6 µ beträgt; gleichzeitig wird keine «falsche Koinzidenz» angezeigt, wenn die beiden Extrempunkte weniger als 0,28 Zyklen voneinander getrennt sind.

Tabelle I

| Anzahl der Zyklen zwischen koinzidierenden Maxima | Optimales Wellenlängenverhältnis (R) | Zulässiger Fehler (F) bei der Bestimmung der Extremwerte |
|---|---|---|
| 2 | 2/1 = 2,0 | 0,3333 |
| 3 | 3/2 = 1,5 | 0,2 |
| 4 | 4/3 = 1,3333 | 0,1429 |
| 5 | 5/3 = 1,6667 | 0,125 |
| 6 | 6/5 = 1,2 | 0,0909 |
| 7 | 7/4 = 1,75 | 0,0909 |
| 8 | 8/5 = 1,6 | 0,0769 |
| 9 | 9/5 = 1,8 | 0,0714 |
| 10 | 10/7 = 1,4286 | 0,0588 |
| 11 | 11/6 = 1,8333 | 0,0588 |

Tabelle I zeigt andere geeignete Wellenlängenverhältnisse, wobei jedes Verhältnis zu einem zulässigen Fehler in der Bestimmung der Lage der Extrempunkte in Bezug gesetzt wurde; ausserdem ist in der Tabelle die entsprechende Anzahl von Zyklen im Signal der kürzeren Wellenlänge angegeben, die von einem koinzidierenden Maximum zum nächsten auftreten. Aus dieser Tabelle ergibt sich allgemein, dass grössere Unsicherheiten in den Schichtdicken, die eine grössere Anzahl von Zyklen zwischen koinzidierenden Punkten erfordern, gleichermassen die Notwendigkeit ergeben, die Lager der Extrempunkte genauer zu bestimmen.

Die optischen Einrichtungen, mit denen die zur Eindeutigkeit der Dickenbestimmung erforderlichen sinusförmigen Signale erzeugt werden können, sind vielfältig. Statt der Schmalbandfilter mit schiefem Strahleinfall können auch übliche Strahlenteiler und Schmalbandfilter mit senkrechtem Strahleinfall verwendet werden. Der beleuchtende Strahl braucht auf die Schicht nicht mit senkrechtem Einfallswinkel aufzutreffen. Es könnten auch zwei verschiedene monochromatische Strahlen verwendet werden, die zu der Schicht hin und von der Schicht weg vollkommen unabhängige Strahlengänge aufweisen können. Zur alternativen Abtastung der beiden Wellenlängen könnte auch ein einzelner Photodetektor verwendet werden. Wellenlängenverhältnisse grösser 2 sind möglich, wenn nicht-sichtbare Wellenlängen Verwendung finden. Eine Koinzidenz von Extrempunkten, die innerhalb des ursprünglichen Dikkenbereichs auftritt, kann umgangen werden (unter der Annahme, dass der Abstand zwischen späteren Koinzidenzen grösser ist als die anfängliche Unsicherheit), indem der Beginn der Suche nach Koinzidenzen entsprechend verzögert wird. Andere Wellenlängenverhältnisse als in Tabelle I angegeben, können verwendet werden, wenn darauf geachtet wird, dass das Muster der zusammenfallenden Extrempunkte eine eindeutige Identifizierung der Dicke bei der vorhandenen Genauigkeit in der Bestimmung der Extrempunkte zulässt. Es ist sogar möglich, mehr als zwei verschiedene Wellenlängen zu verwenden, um die Anzahl der Zyklen zu erhöhen, die zwischen nicht unterscheidbaren Koinzidenzen von Extrempunkten liegt. Diese Variationen des bevorzugten Ausführungsbeispiels sollen aufzeigen, dass die vorliegende Erfindung nicht auf die spezielle Realisierungsform beschränkt ist.

Die Erfindung kann auch in solchen Herstellprozessen verwendet werden, in denen kein Materialabtrag erfolgt, sondern zusätzliches Material aufgebracht wird und bei denen die Ausgangsdikke der Schicht nicht genau bekannt ist.

**Patentansprüche**

1. Verfahren zur interferometrischen Messung der absoluten Dicke von durchsichtigen dünnen Schichten, deren Dicke sich von einem nicht genau bekannten Anfangswert kontinuierlich ändert, dadurch gekennzeichnet, dass die während der Schichtdickenänderung durch Interferenz entstehenden Intensitätsschwankungen des reflektierten oder durchgelassenen Lichtes bei zwei oder mehr Wellenlängen gemessen werden und dass anhand der Koinzidenz von Extremwerten der bei den einzelnen Wellenlängen erfassten Messsignale die absolute Dicke der Schicht eindeutig bestimmt wird.

2. Verfahren nach Anspruch 1, dadurch gekennzeichnet, dass die Intensitätsschwankungen bei genau zwei Wellenlängen ($\lambda_1$, $\lambda_2$) gemessen werden, deren Wellenlängenverhältnis $R = \dfrac{\lambda_2 \, n_1}{n_2 \, \lambda_1}$ ($n_1$, $n_2$ Brechungsindex bei der jeweiligen Wellenlänge) im Bereich $1 < R \le 2$ liegt.

3. Verfahren nach Anspruch 2, dadurch gekennzeichnet, dass als Wellenlängenverhältnis R einer der Werte 2,0, 1,5, 1,33, 1,67, 1,2, 1,75, 1,6, 1,8, 1,43 oder 1,83 gewählt wird.

4. Verfahren nach Anspruch 3, dadurch gekennzeichnet, dass das Wellenlängenverhältnis zu R = 1,33 gewählt wird.

5. Verfahren nach einem der Ansprüche 1 bis 4, dadurch gekennzeichnet, dass das Wellenlängenverhältnis R so gewählt ist, dass bei Anfangsschichtdicken in einem bestimmten Bereich zusammenfallende Extrempunkte erst auftreten, wenn die sich ändernde Schichtdicke den Bereich der Anfangswerte verlassen hat.

6. Einrichtung zur Durchführung des Verfahrens nach einem der Ansprüche 1 bis 5, dadurch gekennzeichnet, dass die zu untersuchende Schicht (12) mit senkrecht einfallendem weissem Licht bestrahlt wird und dass im Strahlengang (28) des reflektierten Lichts zwei Schmalbandfilter (31, 32) mit schiefer Strahlinzidenz derart angeordnet sind, dass sie als Strahlteiler wirken und dass hinter den Schmalbandfiltern jeweils Photodetektoren (34 bzw. 35) zur Registrierung des Intensitätsverlaufs an der vom Schmalbandfilter durchgelassenen Wellenlänge angeordnet sind.

7. Einrichtung nach Anspruch 6, dadurch gekennzeichnet, dass mit dem am zweiten Schmalbandfilter (32) reflektierten weissen Licht eine visuelle Beobachtung des Prüfpunkts durchgeführt wird.

8. Einrichtung zur Durchführung des Verfahrens nach einem der Ansprüche 1 bis 5, dadurch gekennzeichnet, dass zur Beobachtung der Interferenzen bei zwei verschiedenen Wellenlängen getrennte monochromatische Lichtwege vorgesehen sind.

## Claims

1. Method of interferometrically measuring the absolute thickness of transparent thin layers whose thickness varies continuously relative to an initial value not precisely known, characterized in that the intensity variations of the reflected or passed-through light caused by interference during the layer thickness modification are measured for two or more wavelengths, and that on the basis of coincident extrema of the measured signals of the individual wavelengths the absolute thickness of the layer is determined without ambiguity.

2. Method as claimed in claim 1, characterized in that the intensity variations are measured at precisely two wavelengths ($\lambda_1$, $\lambda_2$) whose

wavelength ratio $R = \dfrac{\lambda_2}{n_2}\dfrac{1}{\lambda_1}$ ($n_1$, $n_2$ refraction index

for the respective wavelength) lies in the range of $1 < R \leq 2$.

3. Method as claimed in claim 2, characterized in that as a wavelength ratio R one of the values 2.0, 1.5, 1.33, 1.67, 1.2, 1.75, 1.6, 1.8, 1.43 or 1.83 is selected.

4. Method as claimed in claim 3, characterized in that a wavelength ratio of R = 1.33 is selected.

5. Method as claimed in any one of claims 1 to 4, characterized in that the wavelength ratio R is selected in such a manner that for initial thicknesses in a predetermined range coincident extrema do not appear unless the changing layer thickness has left the range of the initial values.

6. Device for carrying out the method as claimed in any one of claims 1 to 5, characterized in that the layer (12) to be examined is irradiated with vertically incident white light, and that in the beam path (28) of the reflected light two narrow band pass filters (31, 32) with oblique beam incidence are arranged in such a manner that they act as beam splitter, and that behind the narrow band pass filters respective photodetectors (34 and 35) are arranged to register the intensity at the wavelength passing through the narrow band pass filter.

7. Device as claimed in claim 6, characterized in that with the white light reflected at the second narrow band pass filter (32) there is a visual observation of the tested point.

8. Device for carrying out the method as claimed in any one of claims 1 to 5, characterized in that for observing the interferences at two different wavelengths separate monochromatic light paths are provided.

## Revendications

1. Procédé pour la mesure interférométrique de l'épaisseur absolue de couches minces transparentes dont l'épaisseur varie continuellement à partir d'une valeur initiale qui n'est pas connue de façon précise, caractérisé en ce que les variations d'intensité de la lumière réfléchie ou passante, provoquées par interférence durant la modification de l'épaisseur de couche, dont mesurées pour deux longueurs d'onde ou plus, et en ce que l'épaisseur absolue de la couche est déterminée, sans ambiguïté, par la coïncidence des valeurs extrêmes des signaux de mesure détectées aux différentes longueurs d'onde.

2. Procédé selon la revendication 1, caractérisé en ce que les variations d'intensité sont mesurées exactement à deux longueurs d'onde ($\lambda_1$, $\lambda_2$) dont le rapport de longueur d'onde

$$R = \frac{\lambda_2}{n_2}\frac{1}{\lambda_1}$$

$n_1$, $n_2$ tombe dans la gamme $1 < R \leq 2$ ($n_1$, $n_2$ étant l'indice de réfraction pour la longueur d'onde respective.

3. Procédé selon la revendication 2, caractérisé en ce qu'on choisit comme rapport de longueur d'onde R, une des valeurs 2,0, 1,5, 1,33, 1,67, 1,75, 1,6, 1,8, 1,43 ou 1,83.

4. Procédé selon la revendication 3, caractérisé en ce qu'on choisit un rapport d'onde de R = 1,33.

5. Procédé selon l'une quelconque des revendications 1 à 4, caractérisé en ce que le rapport de longueur d'onde R est choisi de telle sorte que, dans le cas de couches initiales dans une gamme donnée, les valeurs extrêmes coïncident seulement lorsque l'épaisseur de couche qui change est sortie de la gamme des valeurs initiales.

6. Dispositif pour exécuter le procédé selon l'une quelconque des revendications 1 à 5, caractérisé en ce que la couche à examiner (12) est irradiée avec une lumière blanche à incidence verticale, en ce que deux filtres à bande passante étroite (31, 32) et à incidence de faisceau oblique sont disposés dans le trajet de faisceau (28) de la lumière réfléchie de telle sorte qu'ils servent de diviseurs de faisceau, et en ce que des photo-détecteurs (34 ou 35) sont disposés derrière les filtres à bande passante étroite pour enregistrer la courbe d'intensité à la longueur d'onde que le filtre à bande étroite a laissé passer.

7. Dispositif selon la revendication 6, caractérisé en ce que la lumière blanche réfléchie par le second filtre à bande étroite (32) est utilisée pour observer visuellement le point de test.

8. Dispositif pour exécuter le procédé selon l'une quelconque des revendications 1 à 5, caractérisé en ce que des trajets de lumière monochromatique séparés sont prévus pour observer l'interférence à deux longueurs d'onde différentes.

**FIG. 1**

**FIG. 2**

λ = 0,45μm

λ = 0,6μm

1,8   2,0   2,2   2,4   2,6   2,8   3,0

A   B   C

TATSÄCHLICHE DICKE DER QUARTZSCHICHT (μm)